(19)

Europäisches Patentamt

European Patent Office

Office européen des brevets

(11) **EP 2 660 761 A1**

(12) **EUROPEAN PATENT APPLICATION**

(43) Date of publication:
06.11.2013 Bulletin 2013/45

(21) Application number: 12194202.3

(22) Date of filing: 26.11.2012

(51) Int Cl.:
*G06Q 10/10* (2012.01)     *G06Q 10/06* (2012.01)
*G06F 1/14* (2006.01)     *G06F 17/30* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 03.05.2012 KR 20120046618

(71) Applicant: Samsung Electronics Co., Ltd
Gyeonggi-do 443-742 (KR)

(72) Inventor: **Kim, Yongsu**
**443-742 Gyeonggi-do (KR)**

(74) Representative: **Jenkins, Richard Gavin**
**Harrison Goddard Foote LLP**
**Saviour House**
**9 St Saviourgate**
**York YO1 8NQ (GB)**

(54) **Timestamp management method for data synchronization and terminal therefor**

(57)     A method for managing timestamps uses the difference between last data synchronization time and new data synchronization time of the data stored in the respective terminals. The method for managing timestamps for data synchronization of a terminal includes configuring a first time and a last synchronization time based on a last data synchronization time and time of a reference terminal at a last data synchronization; configuring, when data synchronization occurs, a second time based on a data synchronization occurrence time; and configuring the timestamp of the data based on the last synchronization time and a difference between the first and second times.

FIG. 1

EP 2 660 761 A1

**Description**

BACKGROUND OF THE INVENTION

1. Field of the Invention

The present invention relates to a timestamp management method and terminal therefore and, in particular, to a method for managing timestamps using the difference between a last data synchronization time and a new data synchronization time of the data stored in the respective terminals.

2. Description of the Related Art

There is a need of a method for identifying the most recent data in cloud services supporting data synchronization among a server and multiple devices.

In an exemplary case where a user uses two devices sharing data such as phonebooks and a calendar, it is required to discriminate among different versions of the data to update the data to the latest version in a synchronization process, i.e. each device has to update the data to the version which has been modified most recently by the user.

In order to identify the most recent version of data, there has been a method in the prior art to determine the data synchronized lately as the most recent version regardless of the time when the data synchronization occurs. However, such a prior art method has a drawback in that, if there is a time offset between the data modification time and the data synchronization time, a certain modification occurring before the delayed synchronization causes deletion of the more recently modified data. In another method in the prior art, a reference device managing the synchronization among an entire plurality of devices provides a reference time value, or the timestamps representing the internal times of the respective devices are used to check the most recent data at every data synchronization occasion. This prior art method has a drawback in that the device, when not connected to the network, cannot receive the reference time value and the internal times of the respective devices may differ from each other, resulting in problems.

SUMMARY OF THE INVENTION

In accordance with an aspect of the present invention, a method for managing timestamps for data synchronization of a terminal includes configuring a first time and a last synchronization time based on a last data synchronization time and a time of a reference terminal at last data synchronization; configuring, when data synchronization occurs, a second time based on a data synchronization occurrence time; and configuring the timestamp of the data based on the last synchronization time and difference between the first and second times.

Preferably, configuring the timestamp includes calculating the difference between the first and second times; and configuring the timestamp to a value obtained by adding the difference to the last synchronization time.

Preferably, configuring the timestamp includes configuring the timestamp using the equations:

$$\Delta = \text{second time} - \text{first time}$$

$$\text{Timestamp} = \text{last synchronization time} + \Delta$$

where the first time denotes the last data synchronization time, the second time denotes the data synchronization occurrence time, and the last synchronization time denotes the time of the reference terminal at the last data synchronization.

Preferably, configuring a first time and a last synchronization time includes storing the last synchronization time configured based on the time of the reference terminal at the last data synchronization; configuring the first time based on the last data synchronization time; and configuring an accumulation time indicating a time elapsed from the last data synchronization to a data synchronization occurrence as an initial value.

Preferably, configuring the timestamp includes configuring the timestamp using the equations:

$$\Delta = \text{second time} - \text{first time}$$

$$\text{Accumulation time} = \text{accumulation time} + \Delta$$

$$\text{Timestamp} = \text{last synchronization time} + \text{accumulation time},$$

where the first time denotes the last data synchronization time, the second time denotes the data synchronization occurrence time, the last synchronization time denotes the time of the reference terminal at the last data synchronization, and $\Delta$ denotes difference or variation between the first and second times.

Preferably, configuring the timestamp includes reconfiguring the accumulation time based on the difference between the first and second times; and configuring the timestamp based on the last synchronization time and the reconfigured accumulation time.

Preferably, configuring a first time and a last synchronization time includes reconfiguring, when a time of the terminal changes, the accumulation time based on a difference between the first time and the last synchronization time; and reconfiguring the first time based on the changed time which is changed due to the time change of the terminal.

Preferably, configuring the timestamp includes reconfiguring, when the time of the terminal changes, the accumulation time and the first time using the equations:

$$\Delta = \text{time change occurrence time} - \text{first time}$$

$$\text{Accumulation time} = \text{accumulation time} + \Delta$$

$$\text{First time} = \text{changed time}$$

where the first time in the first equation denotes the last data synchronization time, $\Delta$ denotes a difference or variation between the time change occurrence time and the first time, and the accumulation time denotes the time elapsed from the last data synchronization to a new data synchronization occurrence.

Preferably, reconfiguring the accumulation time includes calculating the difference between the time change occurrence time and the first time; and reconfiguring the accumulation time by adding the difference to the accumulation time.

In accordance with another aspect of the present invention, a terminal for managing timestamps for data synchronization includes a communication unit which performs data communication with other devices; a storage unit which stores data; and a control unit which configures a first time and a last synchronization time based on a last data synchronization time and a time of a reference terminal at a last data synchronization, configures, when data synchronization occurs, a second time based on data synchronization occurrence time, and configures the timestamp of the data based on the last synchronization time and the difference between the first and second times.

Preferably, the control unit calculates the difference between the first and second times and configures the timestamp to a value obtained by adding the difference to the last synchronization time.

Preferably, the control unit controls the storage unit to store the last synchronization time configured based on the time of the reference terminal at the last data synchronization, configures the first time based on the last data synchronization time, and configures the accumulation time indicating a time elapsed from the last data synchronization to a data synchronization occurrence as an initial value.

Preferably, the control unit reconfigures the accumulation time based on the difference between the first and second times and configures the timestamp based on the last synchronization time and the reconfigured accumulation time.

Preferably, the control unit reconfigures, when a time of the terminal changes, the accumulation time based on difference between the first time and the last synchronization time and reconfigures the first time based on the changed time which is changed due to the time change of the terminal.

Preferably, the control unit calculates the difference between the time change occurrence time and the first time and reconfigures the accumulation time by adding the difference to the accumulation time.

BRIEF DESCRIPTION OF THE DRAWINGS

FIG. 1 is a schematic diagram illustrating a configuration of the data synchronization system to which an exemplary embodiment of the present invention is applied;

FIG. 2 is a block diagram illustrating a configuration of the terminal according to the exemplary embodiment of the present invention;

FIG. 3 is a flowchart illustrating a method for configuring a last synchronization time and the first time according to the exemplary embodiment of the present invention;

FIG. 4 is a flowchart illustrating a timestamp management method according to the exemplary embodiment of the present invention; and

FIG. 5 is a flowchart illustrating a timestamp management method to change a time according to the exemplary embodiment of the present invention.

## DETAILED DESCRIPTION OF THE INVENTION

Hereinafter, preferred embodiments of the present invention will be described with reference to the accompanying drawings. In the  following description, a detailed explanation of known related functions and constructions may be omitted to avoid unnecessarily obscuring the subject matter of the present invention. This invention may, however, be embodied in many different forms and should not be construed as limited to the exemplary embodiments set forth herein. Also, terms described herein, which are defined considering the functions of the present invention, may be implemented differently depending on user and operator's intention and practice. Therefore, the terms should be understood on the basis of the disclosure throughout the specification. The principles and features of this invention may be employed in varied and numerous embodiments without departing from the scope of the invention.

The same reference numbers are used throughout the drawings to refer to the same or like parts. Furthermore, although the drawings represent exemplary embodiments of the invention, the drawings are not necessarily to scale and certain features may be exaggerated or omitted in order to more clearly illustrate and explain the present invention.

The present invention can be applied for checking the most recent data and managing data versions based on the timestamp in the services requiring data synchronization among devices such as a cloud service; that is, a service using a data cloud associated with and accessed through computer networks and/or communication networks.

The present invention also can be applied to all types of devices and services requiring management of timestamps as well as typical electronic devices including a smart phone, a portable terminal, a mobile  terminal, a Personal Digital Assistant (PDA), a Portable Multimedia Player (PMP), a laptop computer, a Wibro terminal, etc. using inter-device data synchronization.

In the following description, the term "timestamp" denotes the information indicating the time at which data synchronization is acquired. The timestamp can be generated as a part of the data or separately and can be stored in the form of a time or a certain code character.

In the following description, a "terminal" refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

In the following description, the term "reference terminal" denotes the terminal referenced by another terminal or device to determine the timestamp of data of the other terminal or device. That is, in order to determine the timestamp, a terminal configures the time of the reference terminal as the last synchronization time. Although it is typical that the reference terminal is a web server managing data synchronization, a specific terminal performing data communication with another terminal directly or via the network can be the reference terminal.

The terms used in describing the exemplary embodiments of the present invention, e.g. first time, second time, last synchronization time, accumulation time, etc. are used for illustrative purposes only and can be replaced by others or omitted.

The terminology used herein is for the purpose of describing exemplary embodiments only and is not intended to be limiting of the invention. Unless otherwise defined, all terms used herein have the same meaning as is commonly understood by one of ordinary skill in the art to which the present invention pertains, and should not be interpreted as having an excessively comprehensive meaning nor as having an excessively contracted meaning.

As used herein, the singular forms "a", "an" and "the" are intended to include the plural forms as well, unless the context clearly indicates otherwise. It will be further understood that the terms "comprises" "comprising," "includes" and/or "including", when used herein, specify the presence of stated features, integers, steps, operations, elements, and/or components, but do not preclude the presence or addition of one or more other features, steps, operations, elements, components, and/or groups thereof.

Exemplary embodiments of the present invention are described with reference to the accompanying drawings in greater detail.

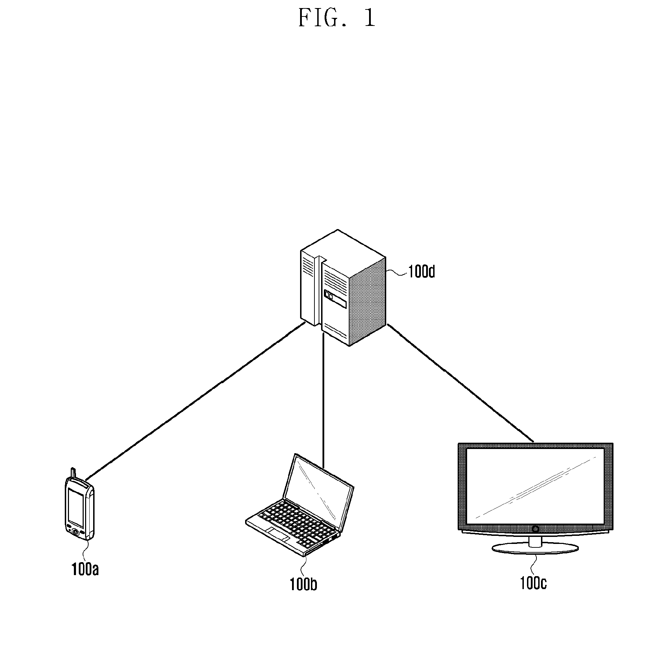

FIG. 1 is a schematic diagram illustrating a configuration of the data synchronization system to which the exemplary embodiment of the present invention is applied.

Referring to FIG. 1, the data synchronization system may include a plurality of terminals 100a, 100b, 100c, and 100d.

The terminals 100a to 100d may form a synchronization group. That is, the data generated, modified, or deleted in one of the terminals are to be generated, modified, and deleted in the other terminals to maintain synchronization.

The terminals 100a to 100d may acquire data synchronization through direct communications among each other or via a web server.

In case of the data synchronization via the web server, certain data of the terminal 100a to 100d may be stored in the server persistently while being stored temporarily in the respective terminals 100a to 100d. The data generated, modified, or deleted in one of the terminals 100a to 100d may be generated, modified, or deleted in the server and the rest of the terminals 100a to 100d identically.

At this time, the terminals 100a to 100d record a timestamp for each data to identify the most recent version of the data. That is, the terminals 100a to 100d record the time when the data synchronization is acquired lately as the timestamp and, if synchronization is attempted by the user or a terminal afterward and if the information on the data to be synchronized is old as compared to the timestamp, the terminals 100a to 100d determine that the current data is the most recent version so as to skip synchronization.

One of the terminals 100a to 100d may operate as the reference terminal; for example, terminal 100d in FIG. 1 for configuring the last synchronization time to be used as the timestamp of the data. In particular, the terminals 100a to 100d may save the time information of the reference terminal 100d at the acquisition of the last synchronization to determine the timestamp.

Although it is typical that the reference terminal 100d may be a server for managing data synchronization, if necessary, one of the terminals 100a to 100d may be configured as the reference terminal.

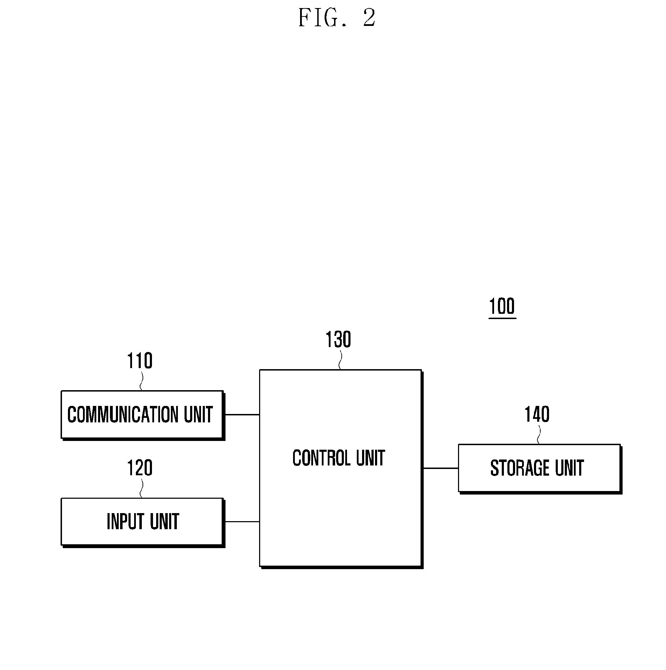

FIG. 2 is a block diagram illustrating a configuration of a generic terminal 100 according to the exemplary embodiment of the present invention, which may be embodied as any one of the terminals 100a, 100b, 100c, or 100d shown in FIG. 1.

As shown in FIG. 2, the terminal 100 according to the exemplary embodiment of the present invention includes a communication unit 110, an input unit 120, a control unit 130, and a storage unit 140.

The communication unit 110 is responsible for wired/wireless communication functions of the terminal 100. The communication unit 110 may include a transmitter for up-converting and amplifying the signal to be transmitted and a receiver for low noise amplifying and downconverting the signal received.

According to the exemplary embodiment of the present invention, the communication unit 110 may perform data communication with other terminals. For example, the communication unit 110 may transmit and receive data to and from another terminal for data synchronization with the counterpart terminal, including the reference terminal such as a server. The communication 110 also may receive a data synchronization command from another terminal.

According to the exemplary embodiment of the present invention, the communication unit 110 may receive time information from another terminal. For example, the communication unit may receive the time information of the reference terminal in a data synchronization procedure with another terminal.

The input unit 120 may receive a user's manipulation signal for controlling operation of the terminal. The input unit may be implemented with at least one of a keypad, a dome switch, a touchpad which may be a resistive and/or conductive touchpad, a jog wheel, and a jog switch.

According to the exemplary embodiment of the present invention, the input unit 120 may receive a user input for generating, modifying, or deleting data. The input unit 120 also may receive an execution command for data synchronization of certain data stored in the terminal 100.

According to the exemplary embodiment of the present invention, the input unit 120 may receive a user input for changing the time of the terminal 100. The input unit 120 also may receive a user input for selecting a menu for changing the time of the terminal 100, the time zone of the terminal 100, and geographical information of the terminal 100 such as latitude and longitude.

The control unit 130 may control the overall operations of the components of the terminal 100. For example, the control unit 130 may control the operation for data synchronization of the terminal 100.

In particular, the control unit 130 may perform synchronization of certain data with another terminal.

The control unit 130 may perform data communication in response to a data synchronization request input by the user. The control unit 130 also may control data synchronization with another terminal without any explicit request from the user when the data is generated, modified, or deleted by the user.

The control unit 130 also may perform data synchronization when a data synchronization execution command or the information on the data created, modified, and deleted by another terminal is received.

The control unit 130 may perform data synchronization with a counterpart terminal by direct communication or via the reference terminal.

The control unit 130 may manage the timestamp of the data for data synchronization.

In particular, the control unit 130 saves and manages the timestamp along with the corresponding data to determine whether the data stored in the terminal 100 is the most recent version. The timestamp is the information indicating the last synchronization time of the data which is provided in the form of a parameter of variation of time or a time value.

According to the exemplary embodiment of the present invention, the control unit 130 may configure the timestamp based on the time of the last data synchronization of the terminal 100 and the accumulation time from the last synchronization time to the new data synchronization time.

In particular, the control unit 130 may configure the first time and the last synchronization time based the last data synchronization time and the time of the reference terminal when the last data synchronization is acquired. When the data synchronization has occurred, the control unit may configure the second time based on the data synchronization start time and configure the timestamp of the data based on the last synchronization time and the difference between the first and second times.

The control unit 130 also may configure the accumulation time as an initial value and, when the time of the terminal 100 is changed, reconfigures the accumulation time based on the difference between the time point of the time change and the first time based on the time point of the time change. The control unit 130 also may reconfigure the accumulation time based on the difference between the first and second times and configures the timestamp based on the last synchronization time and the reconfigured accumulation time.

The control unit 130 may include a time measurement module, a computing module, and a data generation module in order to manage the timestamp as above. The above described operations and computations of the control unit 130 may be recorded and/or implemented in the form of computer program codes and functions that can be executed by the control unit 130.

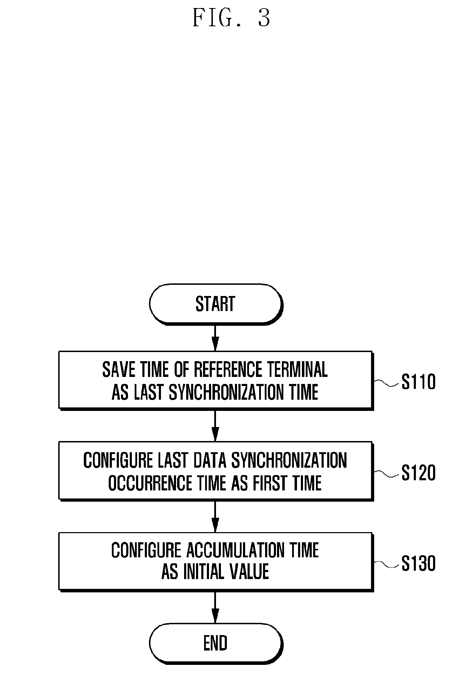

The operations of the control unit 130 are described later in more detail with reference to FIGS. 3 to 5.

The storage unit 140 may store programs, information, and data related to the operation of the terminal 100. For example, the storage unit 140 may store the platform and operating system of the terminal 100 such as "ANDROID", a "LINUX" based operating system for mobile devices commercially available from the "OPEN HANDSET ALLIANCE", as well as other known platforms and operating systems.

The storage unit 140 may store certain data for user convenience.

For example, the data may include at least one of a calendar, a scheduler, a memo, a phonebook, and multimedia data (e.g. audio and still and motion pictures).

The data stored in the storage unit 140 may be synchronized with another terminal under the control of the control unit 130.

According to the exemplary embodiment of the present invention, the storage unit 140 may store the time information. For example, the storage unit 140 may store the information on the data receipt from another terminal, the reference time of the reference terminal at the last data synchronization, the time when the terminal 100 has performed a certain operation, an accumulation time from the last data synchronization to the new data synchronization occurrence, and a timestamp indicating the last synchronization time of the data.

The storage unit 140 may store certain computer program codes and functions implemented to determine the timestamp.

The storage unit 140 may be implemented by at least one of any known storage media including flash memory, a hard disk, a multimedia card micro memory, a card type memory (e.g. SD and XD memory), a Random Access Memory (RAM), Static RAM (SRAM), a Read-Only Memory (ROM), an Electrically Erasable Programmable ROM (EEPROM), a Programmable ROM (PROM), a magnetic memory, a magnetic disc, and an optical disc.

A description is now provided of the last synchronization time and the first time synchronization method in the last synchronization procedure according to the exemplary embodiment of the present invention.

FIG. 3 is a flowchart illustrating a method for configuring a last synchronization time and the first time according to the exemplary embodiment of the present invention.

Referring to FIG. 3, the last synchronization time and first time configuration method according to the exemplary embodiment of the present invention is implemented as follows.

First, the control unit 130 stores the last synchronization time at step S110.

The control unit 130 may configure the last synchronization time based on the reference time of the reference terminal at the last synchronization and controls the storage unit 140 to store the last synchronization time.

The reference terminal is the device performing data synchronization with the terminals 100, such as the terminals 100a to 100d, e.g. the reference terminal may be a web server for managing data synchronization. In the synchronization process with the reference terminal, the control unit 130 may control the communication unit 110 to receive the reference time from the reference terminal. The control unit 130 also may control the storage unit 140 to store the reference time of the reference terminal.

Next, the control unit 130 configures the first time at step S120.

The control unit 130 may configure the first time based on the last data synchronization time, i.e. the current time of the terminal 100 at the last data synchronization.

The control unit 130 further configures the accumulation time at step S130.

The accumulation time may be the time elapsed from the last data synchronization time to a new data synchronization occurrence time.

If necessary for timestamp management, the control unit 130 may configure the accumulation time in addition to the last synchronization time and the first time. At this time, the control unit 130 may configure the accumulation time as the initial value. For example, the control unit 130 may configure the accumulation time at the last data synchronization as zero or a reference time or time value.

A description is now provided of the timestamp management method according to the exemplary embodiment of the present invention.

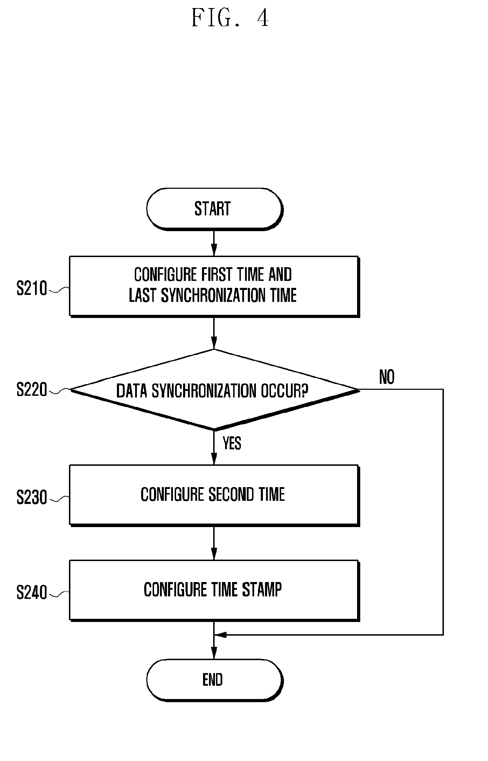

FIG. 4 is a flowchart illustrating a timestamp management method according to the exemplary embodiment of the present invention.

Referring to FIG. 4, the timestamp management method according to the exemplary embodiment of the present invention is implemented as follows.

First, the control unit 130 configures the last synchronization time and the first synchronization time at step S210.

As described with reference to FIG. 3, the control unit 130 may configure the last synchronization time based on the reference time of the reference terminal at the last data synchronization and then the first time based on the last data synchronization time.

If necessary, the control unit 130 may configure the accumulation time as the initial value.

Next, the control unit 130 determines whether data synchronization has occurred at step S220.

If a data synchronization request is input by the user, the control unit 130 may determine that data synchronization has occurred. If there is data manipulation, i.e. if specific data is generated, modified, or deleted, the control unit 130 may determine that data synchronization has occurred.

If a data synchronization command or the information on the generation, modification, or deletion of certain data is received from another terminal, the control unit 130 may determine that data synchronization has occurred.

If no data synchronization has occurred in step S220, the method terminates; however, if data synchronization has occurred, the control unit 130 configures the second time at step S230.

The control unit 130 may configure the second time based on the data synchronization occurrence time, i.e. the current time of the terminal100, as user equipment (UE), when the data synchronization has occurred.

Next, the control unit 130 configures the timestamp at step S240.

The control unit 130 may configure the timestamp of the data based on the last synchronization time and the difference between the first and second times.

For example, the control unit 130 may calculate the difference between the first and second times. The control unit 130 also may configure the timestamp of the data by adding the calculated difference to the last synchronization time. This can be expressed as follows in Equations(1).

$$\Delta = \text{second time} - \text{first time}$$

$$\text{Timestamp} = \text{last synchronization time} + \Delta. \qquad (1)$$

In Equations(1), the first time denotes the last data synchronization, the second time denotes the data synchronization occurrence time, and the last synchronization time denotes the reference time of the reference terminal at the last data synchronization. In Equations(1), $\Delta$ is a parameter used temporarily to indicate the difference or variation between the first and second times, and the operation may be executed as a one step process without the first step for obtaining $\Delta$.

The control unit 130 may configure the timestamp using the accumulation time.

For example, the control unit 130 may configure the timestamp using the accumulation time when the internal time of the terminal 100 is changed by the user or according to a change of geographical information such as the location of the terminal and latitude and longitude of the terminal 100.

For example, the control unit 130 may calculate the difference between the first and second times. The control unit 130 also may reconfigure the accumulation time by adding the difference to the accumulation time. Afterward, the control unit 130 may be configured using the timestamp of the data by adding the reconfigured accumulation time to the last synchronization time. This can be expressed as follows in Equations(2).

$$\Delta = \text{second time} - \text{first time}$$

$$\text{Accumulation time} = \text{accumulation time} + \Delta$$

$$\text{Timestamp} = \text{last synchronization time} + \text{accumulation time.} \quad (2)$$

In Equations(2), the first time denotes the last data synchronization time, the second time denotes the data synchronization occurrence time, and the last synchronization time denotes the reference time of the reference terminal at the last data synchronization. In Equations(2), $\Delta$ is a parameter used temporarily to indicate the difference or variation between the first and second times, and the operation may be executed as a single step or two-step process rather than the three step process using $\Delta$.

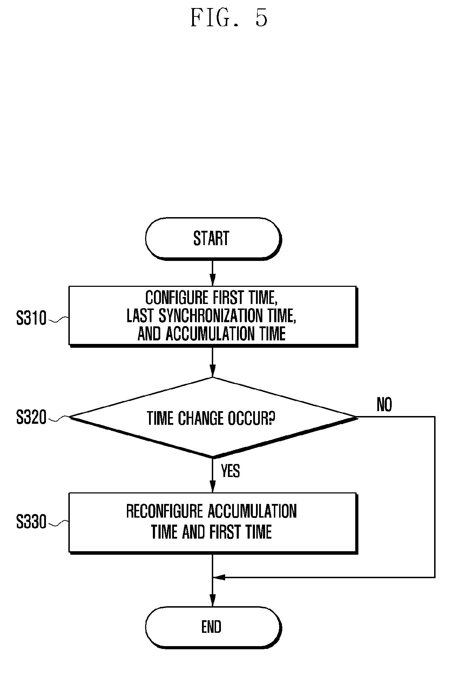

The timestamp configuration method using the accumulation time at a time change is described in greater detail later with reference to FIG. 5.

According to the above timestamp management method, the timestamp is determined based on the difference between the last synchronization time and a new synchronization occurrence time other that the relative synchronization time of the terminal, the reference terminal, or another terminal.

That is, since the timestamp management method according to the exemplary embodiment of the present invention determines the timestamp based on the accumulated time variation based on the reference time of the reference terminal at the last data synchronization other than the time information variable according to the terminal, it is possible to verify the most recent version of the data objectively regardless of the data synchronization latency caused by the time difference between terminals or communication status.

Furthermore, if the data synchronization has completed through the above procedure, the control unit 130 may reconfigure the last synchronization time and the first time based on the completed data synchronization time. The control unit 130 also may reconfigure the accumulation time as an initial value after data synchronization completion.

A description is now provided of the timestamp management method to change a time according to the exemplary embodiment of the present invention.

FIG. 5 is a flowchart illustrating a timestamp management method to change a time according to the exemplary embodiment of the present invention.

Referring to FIG. 5, the timestamp management method to change a time according to the exemplary embodiment of the present invention may be implemented as follows.

First, the control unit 130 configures the first time, the last synchronization time, and the accumulation time at step S310.

As described with reference to FIG. 3, the control unit 130 may configure the last synchronization time based on the time of the reference terminal at the last data synchronization and then the first time based on the last data synchronization time.

The control unit 130 also may configure the accumulation time as the initial value. At this time, the control unit 130 configures the accumulation time as zero or a reference time or time value.

Next, the control unit 130 determines whether the time of the terminal100, which may be UE, changes at step S320.

If no time change occurs in step S320, the method terminates; however, if a time change request is input by the user, the control unit 130 may determine that the time of the terminal 100 has changed in step S320 and proceeds to step S330. The control unit 130 also determines the time change of the terminal100 when the geographical information of the terminal 100, such as the location of the terminal 100 and the latitude and longitude of the terminal 100, changes.

If a time change occurs, the control unit 130 may reconfigure the accumulation time and the first time at step S330.

The control unit 130 may reconfigure the accumulation time based on the time change occurrence time, i.e. the difference between the current time of the terminal 100 in which the time change has occurred and the first time. For example, the control unit 130 may reconfigure the accumulation time by calculating the difference between the time change occurrence time and the first time and adding the difference to the accumulation time.

The control unit 130 also may reconfigure the first time based on the time changed according to the time change occurrence. For example, the control unit 130 may reconfigure the time changed by the time change occurrence as the first time.

Such reconfiguration of time scan be expressed as follows in Equations(3).

$$\Delta = \text{time change occurrence time} - \text{first time}$$

$$\text{Accumulation time} = \text{accumulation time} + \Delta$$

$$\text{First time} = \text{changed time} \qquad\qquad (3)$$

In Equations(3), the first time in the first equation denotes the last data synchronization time. In Equations(3), $\Delta$ is a parameter used temporarily to indicate the difference or variation between the time change occurrence time and the first time, and the reconfiguration operation may be executed as a single step or two-step process rather than the three step process using $\Delta$.

Until new data synchronization has occurred, the control unit 130 performs the above procedure repeatedly whenever the time of the terminal 100 changes. That is, the control unit 130 accumulates the time elapsed from the last synchronization time to the time change occurrence time, and configures the timestamp based on the difference between the time change occurrence and the new data synchronization occurrence.

According to the above timestamp management method, when the time of the terminal 100 is changed intentionally, the timestamp is determined based on the difference between the last synchronization and the new synchronization occurrence other that the time information of the terminal, the reference terminal, or another terminal.

That is, the timestamp management method according to the exemplary embodiment of the present invention determines the timestamp based on the accumulated time obtained by accumulating the time variation other than the variable time information, whereby it is possible to verify the most recent version of the data correctly even when the time of the terminal is changed intentionally.

As described above, the timestamp management method and terminal therefore according to the present invention configures the timestamps of the data stored in the respective terminals based on the time difference between the last data synchronization time and a new data synchronization occurrence time, thereby improving reliability of the order of data synchronization activities taken by the user.

Accordingly, the system of FIG. 1, the terminal apparatus of FIG. 2, and the method of FIGS. 3-5 generate and output timestamps for each of the terminals 100a to 100d, interacting with the reference terminal, to update and reconfigure each of the terminals 100a to 100d, such as to reconfigure the hardware such as the circuitry and any memory in the control unit 130 and/or the storage unit 140 of each terminal 100a to 100d, reconfigure the software stored in any memory in the control unit 130 and/or the storage unit 140 of each terminal 100a to 100d, and reconfigure their respective data using synchronized and/or updated timestamps.

Also, the timestamp management method and terminal therefore according to the present invention is capable of securing data integrity by synchronizing the data based on the reliable time information without compromising cost-effectiveness, resulting in a solution of the problem of time synchronization of electronic devices in the technology of the prior art.

The above-described apparatus and methods according to the present invention can be implemented in hardware, firmware or as software or computer code that can be stored in a recording medium such as a CD ROM, a RAM, a ROM, a floppy disk, DVDs, a hard disk, a magnetic storage media, an optical recording media, or a magnetooptical disk or computer code downloaded over a network originally stored on a remote recording medium, a computer readable recording medium, or a non-transitory machine readable medium and to be stored on a local recording medium, so that the methods described herein can be rendered in such software that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any media such as communication signals transmitted by wire/wireless connections, and their equivalents.

It would be obvious to those skilled in the art that various other changes and modifications can be made without departing from the spirit and scope of the invention. Accordingly, it should be noted that the embodiments are presented simply for the illustrative purpose but not for the purpose of limiting the present invention. The foregoing disclosure has been set forth merely to illustrate the invention and is not intended to be limiting. Since modifications of the disclosed embodiments incorporating the spirit and substance of the invention may occur to persons skilled in the art, the invention should be construed to include everything within the scope of the appended claims and equivalents thereof.

**Claims**

1. A method for managing timestamps for data synchronization of a specific terminal, comprising:

   configuring a first time and a last synchronization time based on a last data synchronization time and time of a reference terminal at a last data synchronization;
   configuring, when data synchronization occurs, a second time based on a data synchronization occurrence time;
   calculating a difference between the first and second times; and
   setting a timestamp of data of the specific terminal based on the last synchronization time and the calcurated difference between the first and second times.

2. The method of claim 1, wherein setting the timestamp comprises:

   configuring the timestamp to a value obtained by adding the difference to the last synchronization time.

3. The method of claim 1 wherein setting the timestamp comprises configuring the timestamp using the equations:

$$\Delta = \text{second time} - \text{first time}$$

$$\text{Timestamp} = \text{last synchronization time} + \Delta$$

   where the first time denotes the last data synchronization time, the second time denotes the data synchronization occurrence time, and the last synchronization time denotes the time of the reference terminal at the last data synchronization.

4. The method of claim 1, wherein configuring the first time and the last synchronization time comprises:

   storing the last synchronization time configured based on the time of the reference terminal at the last data synchronization;
   configuring the first time based on the last data synchronization time; and
   configuring an accumulation time indicating a time elapsed from the last data synchronization to the data synchronization occurrence as an initial value.

5. The method of claim 4, wherein setting the timestamp comprises configuring the timestamp using the equations:

$$\Delta = \text{second time} - \text{first time}$$

$$\text{Accumulation time} = \text{accumulation time} + \Delta$$

$$\text{Timestamp} = \text{last synchronization time} + \text{accumulation time},$$

   where the first time denotes the last data synchronization time, the second time denotes the data synchronization occurrence time, the last synchronization time denotes the time of the reference terminal at the last data synchronization, and $\Delta$ denotes a difference or variation between the first and second times.

6. The method of claim 4, wherein setting the timestamp comprises:

   reconfiguring the accumulation time based on the difference between the first and second times; and

configuring the timestamp based on the last synchronization time and the reconfigured accumulation time.

7. The method of claim 4, wherein configuring the first time and the last synchronization time comprises:

reconfiguring, when a time of the specific terminal changes, the accumulation time based on a difference between the first time and time change occurrence time; and
reconfiguring the first time based on the changed time which is changed due to the time change of the terminal.

8. The method of claim 4, wherein setting the timestamp comprises reconfiguring, when the time of the terminal changes, the accumulation time and the first time using the equations:

$$\Delta = \text{time change occurrence time} - \text{first time}$$

$$\text{Accumulation time} = \text{accumulation time} + \Delta$$

$$\text{First time} = \text{changed time}$$

where the first time in the first equation denotes the last data synchronization time, $\Delta$ denotes a difference or variation between the time change occurrence time and the first time, and the accumulation time denotes the time elapsed from the last data synchronization to the data synchronization occurrence.

9. The method of claim 7, wherein reconfiguring the accumulation time comprises:

calculating the difference between the time change occurrence time and the first time; and
reconfiguring the accumulation time by adding the difference to the accumulation time.

10. A terminal for managing timestamps for data synchronization, comprising:

a communication unit which performs data communication with other devices;
a storage unit which stores data; and
a control unit which configures a first time and a last synchronization time based on a last data synchronization time and a time of a reference terminal at last data synchronization, configures, when data synchronization occurs, a second time based on a data synchronization occurrence time, calculates the difference between the first and second times and sets the timestamp of the data based on the last synchronization time and a difference between the first and second times;
wherein the communication unit outputs the timestamp to a specific one of the other devices to reconfigure the specific device.

11. The terminal of claim 10, wherein the control unit configures the timestamp to a value obtained by adding the difference to the last synchronization time.

12. The terminal of claim 10, wherein the control unit controls the storage unit to store the last synchronization time configured based on the time of the reference terminal at the last data synchronization, configures the first time based on the last data synchronization time, and configures an accumulation time indicating a time elapsed from the last data synchronization to the data synchronization occurrence as an initial value.

13. The terminal of claim 10, wherein the control unit reconfigures an accumulation time based on the difference between the first and second times and configures the timestamp based on the last synchronization time and the reconfigured accumulation time.

14. The terminal of claim 13, wherein the control unit reconfigures, when a time of the terminal changes, the accumulation time based on a difference between the first time and the last synchronization time and reconfigures the first time based on the changed time which is changed due to the time change of the terminal.

**15.** The terminal of claim 14, wherein the control unit calculates the difference between the time change occurrence time and the first time and reconfigures the accumulation time by adding the difference to the accumulation time.

FIG. 1

FIG. 2

100

130

110

COMMUNICATION UNIT

120

INPUT UNIT

CONTROL UNIT

140

STORAGE UNIT

FIG. 3

```
                    ┌─────────────┐
                    │    START    │
                    └──────┬──────┘
                           │
                           ▼
        ┌──────────────────────────────────────┐
        │      SAVE TIME OF REFERENCE TERMINAL  │
        │      AS LAST SYNCHRONIZATION TIME     │──── S110
        └──────────────────┬───────────────────┘
                           │
                           ▼
        ┌──────────────────────────────────────┐
        │     CONFIGURE LAST DATA SYNCHRONIZATION│
        │       OCCURRENCE TIME AS FIRST TIME   │──── S120
        └──────────────────┬───────────────────┘
                           │
                           ▼
        ┌──────────────────────────────────────┐
        │       CONFIGURE ACCUMULATION TIME     │
        │           AS INITIAL VALUE            │──── S130
        └──────────────────┬───────────────────┘
                           │
                           ▼
                    ┌─────────────┐
                    │     END     │
                    └─────────────┘
```

EP 2 660 761 A1

FIG. 4

START

S210 — CONFIGURE FIRST TIME AND
LAST SYNCHRONIZATION TIME

S220 — DATA SYNCHRONIZATION OCCUR?    NO

YES

S230 — CONFIGURE SECOND TIME

S240 — CONFIGURE TIME STAMP

END

# FIG. 5

```
                    ┌─────────────┐
                    │    START    │
                    └──────┬──────┘
                           │
                           ▼
        ┌──────────────────────────────────────┐
        │         CONFIGURE FIRST TIME,         │
S310    │      LAST SYNCHRONIZATION TIME,       │
        │          AND ACCUMULATION TIME        │
        └──────────────────┬───────────────────┘
                           │
                           ▼
                  ◇─────────────────◇                  NO
S320    ◇      TIME CHANGE OCCUR?      ◇──────────┐
                  ◇─────────────────◇             │
                           │                       │
                          YES                      │
                           ▼                       │
        ┌──────────────────────────────┐          │
S330    │    RECONFIGURE ACCUMULATION   │          │
        │       TIME AND FIRST TIME     │          │
        └──────────────┬───────────────┘          │
                       │                           │
                       ◄───────────────────────────┘
                       ▼
                ┌─────────────┐
                │     END     │
                └─────────────┘
```

Europäisches
Patentamt
European
Patent Office
Office européen
des brevets

**EUROPEAN SEARCH REPORT**

Application Number

EP 12 19 4202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP007905525, * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. *<br>----- | 1-15 | INV.<br>G06Q10/10<br>G06Q10/06<br>G06F1/14<br>G06F17/30<br><br><br>TECHNICAL FIELDS SEARCHED (IPC)<br><br>G06Q<br>G06F |

The present search report has been drawn up for all claims

| Place of search | Date of completion of the search | Examiner |
|---|---|---|
| The Hague | 28 June 2013 | Marcu, Antoniu |